(19) Europäisches Patentamt
European Patent Office
Office européen des brevets

(11) **EP 2 098 062 B1**

(12) **EUROPÄISCHE PATENTSCHRIFT**

(45) Veröffentlichungstag und Bekanntmachung des Hinweises auf die Patenterteilung:
**04.01.2017   Patentblatt 2017/01**

(51) Int Cl.:
*H04N 3/14* (2006.01)      *H04N 5/335* (2006.01)

(21) Anmeldenummer: **07815192.5**

(22) Anmeldetag: **22.11.2007**

(86) Internationale Anmeldenummer:
**PCT/AT2007/000526**

(87) Internationale Veröffentlichungsnummer:
**WO 2008/061268 (29.05.2008 Gazette 2008/22)**

(54) **VERFAHREN ZUR GENERIERUNG EINES BILDES IN ELEKTRONISCHER FORM, BILDELEMENT FÜR EINEN BILDSENSOR ZUR GENERIERUNG EINES BILDES SOWIE BILDSENSOR**

METHOD FOR GENERATING AN IMAGE IN ELECTRONIC FORM, IMAGE ELEMENT FOR AN IMAGE SENSOR FOR GENERATING AN IMAGE, AND IMAGE SENSOR

PROCÉDÉ DE FORMATION D'UNE IMAGE SOUS FORME ÉLECTRONIQUE, ÉLÉMENT D'IMAGE POUR UN DÉTECTEUR D'IMAGE DESTINÉ À FORMER UNE IMAGE ET DÉTECTEUR D'IMAGE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **23.11.2006   AT 19402006**

(43) Veröffentlichungstag der Anmeldung:
**09.09.2009   Patentblatt 2009/37**

(73) Patentinhaber: **AIT Austrian Institute of Technology GmbH**
**1220 Wien (AT)**

(72) Erfinder:
• **POSCH, Christoph**
  **1170 Wien (AT)**
• **LITZENBERGER, Martin**
  **2460 Bruck an der Leitha (AT)**
• **MATOLIN, Daniel**
  **1050 Wien (AT)**
• **WOHLGENANNT, Rainer**
  **1070 Wien (AT)**

(74) Vertreter: **Patentanwälte Pinter & Weiss OG**
**Prinz-Eugen-Straße 70**
**1040 Wien (AT)**

(56) Entgegenhaltungen:
**US-B1- 6 253 161     US-B1- 6 587 145**

• **LICHTSTEINER P ET AL: "A 64x64 aer logarithmic temporal derivative silicon retina" RESEARCH IN MICROELECTRONICS AND ELECTRONICS, 2005 PHD JULY, 25, 2005, PISCATAWAY, NJ, USA,IEEE, Juli 2005 (2005-07), Seiten 202-205, XP010859043 ISBN: 0-7803-9345-7**

**Beschreibung**

Die Erfindung betrifft ein Verfahren zur Generierung eines Abbildes einer Szene in elektronischer Form durch Bildelemente, weiters ein Bildelement für einen Bildsensor zur Generierung eines Bildes mit einer Vorrichtung zur Belichtungsmessung, und einen Bildsensor zur Generierung eines Bildes in elektronischer Form mit einer Vielzahl von Bildelementen,

Klassische Bildverarbeitung beruht auf der Auswertung von Daten die von einem Bildsensor geliefert werden. Bei der Datenaufnahme mittels eines Bildsensors wird üblicherweise die in elektronische Form überführte visuelle Information für jedes Bildelement (Pixel) des Sensors mit vorgegebenem Takt (synchron), typischerweise viele Male pro Sekunde, aus dem Bildsensor ausgelesen. (z.B. Fossum E.R., "CMOS image sensors: Electronic Camera-On-A-Chip", Electron Devices, IEEE Transactions on, Vol.44, Iss.10, , pp.1689-1698, Oct 1997). Dieses Prinzip stößt aufgrund der produzierten Datenmengen bei (zeitlich und/oder örtlich) hochauflösenden Sensoren und der daraus resultierenden aufwendigen Nachverarbeitung an mehrere Grenzen. Zum einen ist die Datenrate digitaler Übertragungskanäle begrenzt und für manche Aufgaben der Hochleistungs-Bildverarbeitung nicht ausreichend groß, weiters sind die Anforderungen an Speicherplatz für die vom Bildsensor gelieferten Datenmengen, insbesondere bei Hochgeschwindigkeitsanwendungen, oft technisch (oder auch wirtschaftlich sinnvoll) nicht zu erfüllen. Weiters haben entsprechend leistungsfähige Signalverarbeitungsprozessoren für viele, insbesondere mobile, Anwendungen einen zu hohen Energieverbrauch oder sind für viele Anwendungsgebiete zu teuer. Schließlich sind manche (Hochgeschwindigkeits-) Anwendungen zufolge mangelnder Prozessorleistung gar nicht realisierbar.

Seit einigen Jahren werden Bildsensor-Architekturen untersucht, die eine Vorverarbeitung der Bildinformation direkt am Sensor, meist parallel in jedem Bildelement, vornehmen ("focal plane processing"). Einige dieser Sensoren senden die vorverarbeitete Bildinformation asynchron und ereignisgesteuert, d.h. unabhängig von einem externen Takt und nur dann wenn relevante Information im der Szene detektiert wird.

Im speziellen Fall des Optischen Transienten-Sensors sind diese relevanten Informationen relative Veränderungen in der von den einzelnen, autonom arbeitenden Bildelementen (Pixel) empfangenen Beleuchtungsintensität. Die elektronische Schaltung, Transienten-Detektor, die diesen Bildelementen zugrunde liegt, ist in Lichtsteiner, P.; Posch, C.; Delbruck, T., "A 128x128 120dB 30mW asynchronous vision sensor that responds to relative intensity change," Solid-State Circuits, 2006 IEEE International Conference Digest of Technical Papers , pp. 2060- 2069, Feb. 6-9, 2006, in Lichtsteiner, P.; Delbruck, T.; Posch, C., "A 100dB dynamic range high-speed dual-line optical transient sensor with asynchronous readout," Circuits and Systems, 2006. ISCAS 2006. Proceedings. 2006 IEEE International Symposium on, pp. 1659- 1662, 21-24 May 2006, und in WO 2006/128315 A1 beschrieben.

Da Helligkeitsänderungen üblicherweise durch eine Änderung der Reflektivität von Objekten in der Szene hervorgerufen werden, sind damit zumeist Objektbewegungen verbunden. Pixel die keine Helligkeitsänderung detektieren, produzieren keine Daten. Dadurch wird die anfallende Datenmenge im Vergleich zu herkömmlichen CMOS oder CCD Bildsensoren, die wie zuvor angesprochen ihr gesamtes Pixelfeld ständig mit konstanter Rate ("Frame-Rate") auslesen, erheblich reduziert. Jedoch sind auch nur Informationen über die veränderlichen Objekte in der Szene im Datenstrom enthalten, d.h. es existiert keine Bildinformation über homogene Flächen und unbewegten Hintergrund (d.h. keine Grauwert-Information). Da die einzelnen Pixel asynchron und mit geringer Latenz auf Stimuli in ihrem Blickfeld reagieren, kommt es bei der Auslese zu keiner Zeitquantisierung und es kann eine hohe Zeitauflösung erreicht werden. Für viele Anwendungen der "Machine Vision", etwa in den Bereichen Automotive, Überwachung, industrielle Automatisierung etc. sind die Daten eines Transienten-Sensors hervorragend geeignet.

Eine einschränkende Eigenschaft von optischen Transienten-Sensoren ist das Fehlen eines für den Menschen "lesbare" Bildes (Intensitäts- bzw. Grauwert-/Farb-Bild). Manche Anwendungen benötigen jedoch Information über unbewegliche (oder unveränderliche) Objekte oder über den Szenenhintergrund. Auch wenn menschliche Operatoren eingesetzt werden ist ein Video-Bild der betrachteten Szene unverzichtbar.

Die Nachteile von herkömmlichen, getakteten CMOS oder CCD Bildsensoren sind, wie schon erwähnt, die Limitierung der zeitlichen Auflösung auf die "Frame"-Rate mit der das Pixel-Feld ausgelesen wird, die Menge von hoch-redundanten Daten die von solchen Sensoren generiert werden und der eingeschränkte Dynamikbereich.

Die Aufgabe der vorliegenden Erfindung ist die Entwicklung eines Verfahren und einer Einrichtung zur kontinuierlichen Aufnahme der Bildinformation einer betrachteten veränderlichen Szene mit möglichst hoher Zeit- und Intensitäts-Auflösung und über einen weiten Dynamikbereich (der verarbeitbaren Lichtintensität). Die aufgenommenen Daten sollen dabei nicht aus einer Abfolge von Einzelbildern bestehen, sondern aus einem asynchronen Strom von Veränderungsinformationen einzelner Pixel, die nur dann aufgezeichnet und übermittelt werden, wenn tatsächlich eine Veränderung im Blickfeld des Pixels statt gefunden hat. Dies führt zu einer weitgehenden Unterdrückung der für herkömmliche Bildsensoren typischen temporalen Redundanz in der Bildinformation und zu wesentlich geringere Datenmengen bei gleichem (oder sogar höherem) Informationsgehalt. Das Resultat ist vergleichbar mit einem Video, jedoch ohne Einzelbilder. Das Bildelement für einen Bildsensor zur Umsetzung des besagten Verfahrens kann auf Basis von analogen, elektronischen Schaltungen realisiert werden. Der Bildsensor mit einer Vielzahl solcher Bildelemente soll günstigerweise einen möglichst geringen Leistungsverbrauch aufweisen und wird typischerweise als integriertes CMOS System realisiert.

Zur Lösung dieser Aufgabe ist das eingangs dargelegte Verfahren dadurch gekennzeichnet, dass eine Belichtungsmessung an einem der autonomen Bildelement mittels eines ersten Photorezeptors durch das Ereignis einer selbständigen, asynchronen Detektion einer Helligkeitsänderung im vom Bildelement betrachteten Szenenauschnitt durch einen weiteren Photorezeptor des selben Bildelements stimuliert wird, und dass das Resultat dieser Messung zusammen mit der Adresse des Bildelementes asynchron zur Speicherung und/oder Weiterverarbeitung übermittelt wird. Nachdem jedes Pixel des Sensors zumindest einmal eine Änderung detektiert hat, und somit eine Belichtungsmessung vorgenommen hat, liegt ein Abbild (Grauwert-/Farb-Bild) der gesamten betrachteten Szene in digitaler Form vor. In weiterer Folge senden nur Pixel, die Helligkeitsänderungen in ihrem Blickfeld detektieren, neue aktualisierte Grauwerte (und nicht alle Pixel zu vorgegebenen Zeitpunkten unabhängig davon ob neue Informationen vorliegen oder nicht). Für Pixel, die keine Helligkeitsänderung detektieren, d.h. eine unveränderte Helligkeit "sehen", ist keine Grauwert-Aktualisierung notwendig. Durch dieses Verfahren wird, je nach dynamischem Inhalt der betrachteten Szene, eine substantielle Reduktion der generierten Datenmenge im Vergleich zu einem getakteten (synchronen) Bildsensor bei gleichem Ergebnis erzielt. Als Resultat liegt zu jeder Zeit ein vollständiges (Grauwert-)Bild der betrachteten Szene im Bildspeicher und wird mit hoher Zeitauflösung aber (relativ) geringer Datenrate ständig aktualisiert. Eine Auslese der Bildinformation aus dem Bildspeicher ist unabhängig vom Bildaufnahmebetrieb jederzeit und mit hohen Wiederholraten möglich.

Gemäß der bevorzugten Ausführungsform der Erfindung wird das Ende der Belichtungsmessung durch das Erreichen eines einstellbaren Schwellenwertes durch eine von der Belichtung abhängige physikalische Größe am Bildelement festgestellt, die Adresse des Bildelementes zu diesem Zeitpunkt zur Weiterverarbeitung übermittelt, und die Zeitdifferenz zwischen dem Zeitpunkt des die Belichtungsmessung auslösenden Ereignisses und dem Erreichen des Schwellenwertes als Maß für die Belichtung des Bildelementes herangezogen. Die erwähnte, von der Belichtung abhängige physikalische Größe am Bildelement ist vorzugsweise die elektrische Spannung am Integrations-Kondensator der Photodetektor-Schaltung. Die Adresse des Bildelementes wird zu diesem Zeitpunkt erneut, asynchron und ereignisgesteuert, zur Weiterverarbeitung übermittelt, und die Zeitdifferenz zwischen dem Zeitpunkt des die Belichtung auslösenden Ereignisses, detektiert vom Transienten-Detektor, und dem Erreichen des Schwellenwertes, detektiert von einem Schwellwert-Vergleicher der das Spannungssignal der Photodetektor-Schaltung mit einer einstellbaren Schwelle vergleicht, als Maß für die Belichtung des Bildelementes herangezogen. Das erfindungsgemäße Verfahren benötigt keine externen Kontrollsignale zur Steuerung von Zeitabläufen, insbesondere der Belichtungsmessung.

Konzepte und Verfahren zum Thema "zeitbasierte Bildsensoren" sind in den folgenden Publikationen beschrieben:

Bermak, "A CMOS imager with PFM/PWM based analog-to-digital converter", Circuits and Systems, 2002. ISCAS 2002. IEEE International Symposium on, 2002;

Chen S.; Bermak, A., "A low power CMOS imager based on time-to-first-spike encoding and fair AER," Circuits and Systems, 2005. ISCAS 2005. IEEE International Symposium on, pp. 5306- 5309 Vol. 5, 23-26 May 2005;

Chen S.; Bermak, A., "A Second Generation Time-to-First-Spike Pixel with Asynchronous Self Power-off," Circuits and Systems, 2006. ISCAS 2006. Proceedings. 2006 IEEE International Symposium on, pp. 2289- 2292, 21-24 May 2006;

Culurciello, E.; Etienne-Cummings, R.; Boahen, K., "Arbitrated address-event representation digital image sensor," Electronics Letters, vol.37, no.24pp.1443-1445, 22 Nov 2001;

Culurciello, E.; Etienne-Cummings, R.; Boahen, K.A., "A biomorphic digital image sensor," Solid-State Circuits, IEEE Journal of, vol.38, no.2pp. 281-294, Feb 2003;

J.G. Harris, X. Qi, Q. Luo and X. Guo, "SNR and FPN considerations for time-based wide dynamic range CMOS image sensors", 6th World Multiconference on Systemics, Cybernetics and Informatics, July 14-18, 2002;

Kitchen, A.; Bermak, A.; Bouzerdoum, A., "PWM digital pixel sensor based on asynchronous self-resetting scheme," Electron Device Letters, IEEE, vol.25, no.7pp. 471- 473, July 2004;

Qiang Luo; Harris, J.G., "A time-based CMOS image sensor," Circuits and Systems, 2004. ISCAS '04. Proceedings of the 2004 International Symposium on, vol.4, IV- 840-3 Vol.4, 23-26 May 2004;

Xin Qi; Xiaochuan Guo; Harris, J.G., "A time-to-first spike CMOS imager," Circuits and Systems, 2004. ISCAS '04. Proceedings of the 2004 International Symposium on, vol.4, IV-824-7 Vol.4, 23-26 May 2004;

Chen Xu; Chao Shen; Bermak, A.; Mansun Chan, "A new digital-pixel architecture for CMOS image sensor with pixel-level ADC and pulse width modulation using a 0.18 μm CMOS technology," Electron Devices and Solid-State Circuits, 2003 IEEE Conference on, pp. 265-268, 16-18 Dec. 2003;

bzw. den Patentschriften US 6,660,989; US 6,069,377; US 6,642,503; US 5,650,643; US 5,565,915 und US 6,587,145.

Alle beschriebenen Verfahren unterscheiden sich wesentlich vom erfindungsgemäßen Ansatz, da sie z.B. einen Belichtungszyklus für das gesamte Pixelfeld ("Frame") oder zumindest zeilen- (spalten-) weise (z.B "rolling-shutter mode") extern (d.h. mit einem globalen "Start" oder "Reset"-Signal) initiieren oder die Helligkeitsinformation als "Inter-Spike-Intervalle" in kontinuierliche "Request-Acknowledge-Reset-Integrate" Zyklen kodieren

Um durch Schwankungen der Offset-Spannung oder durch temporäre Störungen verursachte Fehler zu unterdrücken, kann vorteilhafterweise vorgesehen sein, dass nach Erreichen eines ersten Spannungswertes zu Beginn der Integration die Adresse des Bildelementes übermittelt wird, dass anschließend bei Erreichen eines zweiten Spannungswertes (des selben Integrationsvorganges) die Adresse dieses Bildelementes erneut übermittelt wird, und dass die Zeitdifferenz zwischen den Zeitpunkten des Erreichens der beiden unterschiedlichen Spannungswerte als Maß für die Belichtung des Bildelementes herangezogen wird.

In allen Varianten kann die Information über die Detektion einer Helligkeitsänderung und über die Belichtungsmessung parallel und unabhängig von einander übermittelt werden.

Ein wesentliches Merkmal der Erfindung besteht darin, dass die Belichtungsmessung an einem Bildelement durch eine Helligkeitsänderung an diesem Bildelement initiiert wird, wobei das Eintreten der Helligkeitsänderung zusätzlich durch die Übermittlung der Adresse des Bildelementes zur Weiterverarbeitung signalisiert wird.

Gemäß einer weiteren Ausführungsform der Erfindung wird, wie bei einem konventionellen APS Bildsensor, der resultierende Spannungswert am Bildelement nach Integration über eine vorgegebene Zeitdauer ermittelt und als Maß für die Belichtung des Bildelementes herangezogen und zur Weiterverarbeitung übermittelt. Der Zeitpunkt des die Belichtung auslösenden Ereignisses wird dabei jedoch, wie zuvor, von der Pixelschaltung autonom und asynchron bestimmt.

Die Initiierung der Belichtungsmessung für eine Gruppe von Bildelementen kann gemeinsam freigeschaltet oder gesperrt werden, um damit eine Ausschnitts-Auswahl aus dem gesamten Bildbereich treffen zu können, für welchen ein für den Benutzer "lesbare" Bild generiert werden kann. Beispielsweise können Bereiche weggeschaltet werden, in welchen die Überwachung auf Helligkeitsänderungen ausreicht, was natürlich auch die zu übertragende Datenrate vermindert.

In ähnlicher Weise kann es auch vorteilhaft sein, wenn gemäß einer erfindungsgemäßen Ausführungsform schon die Detektion von Helligkeitsänderungen für eine Gruppe von Bildelementen gemeinsam freigeschaltet oder gesperrt wird. So können unwichtige Bereiche gänzlich weggeschaltet oder die Bilderzeugung auf kleinere Ausschnitte beschränkt werden, was die zu übertragende Datenrate wesentlich vermindert.

Vorteilhafterweise kann das Verfahren wie bislang erläutert weiter verbessert werden, indem zu zumindest einem beliebigen Zeitpunkt eine Referenzbelichtungsmessung an zumindest einem Bildelement extern initiiert wird. Die bislang beschriebenen Bildelemente und daraus aufgebaute Bildsensoren liefern erst nach einer, vom dynamischen Inhalt der betrachteten Szene abhängigen Zeit ein komplettes Bild mit Grauwerten für alle Pixel. Dies resultiert aus der Eigenschaft, dass Pixel, die keine Veränderung in ihrem Blickfeld detektieren, keine Belichtungsmessung auslösen. Es ist daher vorteilhaft, zu beliebigen Zeitpunkten ein gesamtes Bild ("Referenz-Frame") aufnehmen zu können um bei Szenen mit unveränderlichem Hintergrund ein komplettes Bild zu erhalten. Weiters ist diese Funktionalität zweckmäßig, da zur optimalen Festlegung der Parameter für die Wandlung der Zeitinformation in Bild-Grauwerte durch die Nachverarbeitungsstufe die Kenntnis der Helligkeitsinformation der gesamten Szene erforderlich ist. Die für die Wandlung notwendigen Daten (Offset, Range) können auf einfache Weise aus den Zeitwerten des Referenz-Frames extrahiert werden. Dabei kann die Zufalls-Stimulierung der Bildelemente und damit die Auslösung der Belichtungsmessungen begünstigt werden.

Es kann dabei vorgesehen sein, dass die Belichtungsmessung in mehreren, vorzugsweise in allen parallelen Zeilen von Bildelementen an deren ersten Bildelementen jeweils im wesentlichen gleichzeitig initiiert wird, und dass am Ende der Integration der Belichtungsmessung eines Bildelementes die Belichtungsmessung am jeweils nächsten Bildelement der gleichen Zeile initiiert wird. Alternativ dazu könnte die Belichtungsmessung aber auch im Wesentlichen gleichzeitig in Bildelementen ausgelöst werden, die gemäß einem beliebig vorgebbaren Muster, vorzugsweise einem zusammenhängenden Bereich, angeordnet sind.

Vorteilhafterweise kann die Referenzbelichtungsmessung gleichzeitig zur und unabhängig von der Detektion von Helligkeitsänderungen durch die Bildelemente des Bildsensors vorgenommen werden.

Eine schaltungstechnische Vereinfachung und Verminderung des Flächenbedarfs für die Schaltung kann bei einer Ausführungsform erzielt werden, bei welcher die Initiierung der Belichtungsmessung für ein Bildelement durch Aktivierung jeweils der gesamten, dieses Bildelement enthaltenden Spalte als auch Zeile und der logischen "UND"-Verknüpfung dieser Aktivierungssignale erfolgt. Ein erfindungsgemäßes Bildelement weist dazu eine Vorrichtung zur Belichtungsmessung auf und ist dadurch gekennzeichnet, dass zwei Photorezeptoren vorgesehen sind, von welchen ein Photorezeptor für die Belichtungsmessung genutzt wird, die durch eine Helligkeitsänderung am anderen Photorezeptor ausgelöst wird, wobei weiters eine Schaltung zur asynchronen und ereignisgesteuerten Übermittlung des Resultates der Belichtungsmessung sowie seiner Adresse an eine Auswerteschaltung vorgesehen ist, und dass zusätzlich eine Schaltung zur Detektion von Helligkeitsänderungen vorgesehen und mit der Auswerteschaltung verbunden ist, wobei die Schaltung bei Detektion einer Helligkeitsänderung ein Signal zur Initiierung der Vorrichtung zur Belichtungsmessung und der Schaltung zur asynchronen und ereignisgesteuerten Übermittlung des Resultates der Belichtungsmessung sowie seiner Adresse ausgibt.

Aus einer Anzahl von diesen vorzugsweise autonom und asynchron arbeitenden Bildelementen, auch Pixel genannt, und einem Bildspeicher mit einer der Anzahl der Bildelemente im Sensor entsprechenden Zahl von Speicherzellen, in dem die Ergebnisse der jeweils aktuellsten Belichtungsmessung für jedes Pixel abgelegt werden, kann ein Bildsensor zur Durchführung des bislang beschriebenen Verfahrens aufgebaut werden. Der Speicher kann auf dem selben Substrat ("Chip") wie der Bildsensor selbst realisiert werden oder ein separater Baustein sein.

Zur Helligkeitsmessung ist das Bildelement mit einem Photodetektor versehen, wie sie auch in traditionellen getakteten CMOS Bildsensoren zur Anwendung gelangen. Photodetektor-Schaltungen sind z.B. in Fossum E.R., "CMOS image sensors: Electronic Camera-On-A-Chip", Electron Devices, IEEE Transactions on, Vol.44, Iss.10, pp.1689-1698, Oct 1997, in Noble P.J.W., "Self-scanned silicon image detector arrays" Electron Devices, IEEE Transactions on, Vol.15, Iss.4, pp. 202- 209, Apr. 1968, und in Chamberlain S.G., "Photosensitivity and Scanning of Silicon Image Detector Arrays," Solid-State Circuits, IEEE Journal of, Vol.4, Iss.6, pp. 333- 342, Dec 1969, dargestellt. In einem CMOS Pixel wird der von einer Photodiode in Abhängigkeit der eingestrahlten Lichtintensität generierte Photostrom auf einem Kondensator aufintegriert und der resultierende elektrische Spannungswert nach einer festgesetzten Zeit ausgelesen. Sowohl Beginn als auch Ende dieser Integration wird in einem herkömmlichen CMOS Bildsensor, für alle Pixel gleich, durch externe Steuersignale vorgegeben.

Im erfindungsgemäßen Bildelement wird der Zeitpunkt des die Belichtungsmessung (=Integration) auslösenden Ereignisses nicht, wie bei konventionellen Bildsensoren, für alle Pixel gleich und synchron von einem gemeinsamen Zeitpunkt abgeleitet, sondern von jedem Pixel abhängig vom Inhalt der betrachteten Szene, d.h. bei Detektion einer Helligkeitsänderung, für sich selbst bestimmt. Zu diesem Zeitpunkt übermittelt das Bildelement seine Adresse, typischerweise eine X,Y-Adresse in einem rechteckigen Pixelfeld des Bildsensors, selbständig über einen vorzugsweise arbitrierten und asynchronen Übertragungskanal zur Weiterverarbeitung.

Gemäß einer vorteilhaften Ausführungsform kann vorgesehen sein, dass die Signalleitung von der Schaltung zur Detektion von Helligkeitsänderungen zur Vorrichtung zur Belichtungsmessung und der Schaltung zur asynchronen und ereignisgesteuerten Übermittlung des Resultates der Belichtungsmessung sowie seiner Adresse trennbar ist, wobei eine externe Steuerleitung zur Initiierung der Vorrichtung und der Schaltung vorgesehen ist.

Gemäß einer vorteilhaften Ausführungsform der Erfindung ist vorgesehen, dass die Vorrichtung zur Belichtungsmessung eine Integrationsschaltung mit Schwellwertentscheider umfasst und zusammen mit der Schaltung zur asynchronen und ereignisgesteuerten Übermittlung des Resultates der Belichtungsmessung sowie seiner Adresse in einer Schaltung zusammengefasst ist.

Vorteilhafterweise kommt als Schwellwertentscheider ein zweistufiger Operationsverstärker zum Einsatz, bei dem mittels eines zusätzlichen Transistors im Ruhezustand der Schaltung, der statische Stromfluss, und damit die Leistungsaufnahme, im Schwellwertentscheider auf nahezu Null reduziert wird.

Ein zusätzlicher Vorteil kann dadurch erzielt werden, dass der Schwellwertentscheider zwischen zwei einstellbaren Vergleichsspannungen umschaltbar ist, wobei während des Integrationsvorganges zwischen zwei separat einstellbaren Werten umschaltbar ist, wobei die Schaltung zur asynchronen und ereignisgesteuerten Übermittlung des Resultates der Belichtungsmessung sowie seiner Adresse den Schwellwertentscheider um Umschaltung zwischen diesen Vergleichsspannungen ansteuert. Damit erfolgt die Auswahl der jeweils anzulegenden Vergleichsspannung sowie die Bestimmung der Umschaltzeitpunkte durch die Schaltung zur asynchronen und ereignisgesteuerten Übermittlung des Resultates der Belichtungsmessung sowie seiner Adresse selbständig im Bildelement, so dass damit Fehler durch Schwankungen der Offset-Spannung bzw. durch temporäre Störungen unterdrückt werden können. Weiters sind vorzugsweise zwei parallele, unabhängige, asynchrone Bus-Arbiter vorgesehen, über welche separat voneinander die Schaltung zur Detektion von Helligkeitsänderungen und die Schaltung zur Belichtungsmessung mit der Auswerteschaltung verbunden sind. Geeignete asynchrone Bus-Arbiter sind beispielsweise in Boahen K., "Point-to-point connectivity between neuromorphic chips using Address Events", IEEE Transactions on Circuits and Systems II: Analog and Digital Signal Processing, vol. 47 pp. 416-433, 2000 und K. A. Boahen, "A burst-mode word-serial address-event link-I transmitter design," IEEE Transactions on Circuits and Systems I-Regular Papers, vol. 51, pp. 1269-1280, 2004, beschrieben.

Gemäß einem optionalen Erfindungsmerkmal kann weiters vorgesehen sein, dass die Schaltung zur Belichtungsmessung eine Integrationsschaltung mit einstellbarer Integrationszeit aufweist und mit einem Analog/Digital-Wandler für den resultierenden Spannungswert verbunden ist.

Dabei ist zweckmäßigerweise der Analog/Digital-Wandler über einen von der Übertragung der Detektion von Helligkeitsänderungen separaten Datenbus mit der Auswerteschaltung verbunden.

Eine Ausführungsform des erfindungsgemäßen Bildelementes ist dadurch gekennzeichnet, dass die Schaltung zur Detektion von Helligkeitsänderungen einen Transienten-Detektor mit einem analogen Schaltkreis zur Signalvorverarbeitung und zum asynchronen Senden über vorzugsweise das "Adress-Event-Protokoll" ("Adress-Event-Representation", AER) aufweist. AER ist beispielsweise in Boahen K., "Point-to-point connectivity between neuromorphic chips using Address Events", IEEE Transactions on Circuits and Systems II: Analog and Digital Signal Processing, vol. 47 pp. 416-433, 2000, beschrieben.

Ein Bildsensor zur Generierung eines Bildes, mit einem grundlegenden Aufbau wie eingangs erläutert, ist zur Lösung der gestellten Aufgabe dadurch gekennzeichnet, dass seine Bildelemente nach einem der vorhergehenden Absätze aufgebaut sind.

Gemäß einer vorteilhaften Ausführungsform kann dieser Bildsensor auch dadurch gekennzeichnet sein, dass eine Schaltung zur zwangsweisen Anregung der Belichtungsmessung bei zumindest einem Bildelement zu einem beliebigen Zeitpunkt vorgesehen ist.

Ein spezielle Ausführungsform eines erfindungsgemäßen Bildsensors ist gekennzeichnet durch Bildelemente, die zeilenförmig angeordnet sind und dadurch, dass die Schaltung zur im wesentlichen gleichzeitigen zwangsweisen externen Anregung der jeweils ersten Bildelemente jeder Zeile, zur Ermittlung des Endes der Belichtungsmessung jedes Bildelementes und zur zwangsweisen Anregung des jeweils nächsten Bildelementes der gleichen Zeile ausgelegt ist.

Bei allen der genannten Ausführungsformen sind im Rahmen der Erfindung weitere Abwandlungen möglich. Beispielsweise könnte eine Schaltung zur Einstellung des Leckstroms der Schaltung zur Detektion von Helligkeitsänderungen vorgesehen sein, welche zur zeitlich zufälligen Anregung der Belichtungsmessung im Bildelement verwendet werden kann. Es kann aber auch eine Schaltung zur im wesentlichen gleichzeitigen, zwangsweisen Anregung der Schaltung zur Belichtungsmessung für eine Gruppe von Bildelementen implementiert sein, welche Gruppe von Bildelementen gemäß einem beliebig vorgebbaren Muster, vorzugsweise einem zusammenhängenden Bereich, angeordnet ist. Zur Verringerung des schaltungstechnischen Aufwandes als auch des Platzbedarfes für die Schaltung könnte je eine Reset-Logik für die Schaltung zur Belichtungsmessung jeweils für eine gesamte Zeile bzw. eine gesamte Spalte von Bildelementen vorgesehen sein, wobei im Bildelement selbst eine logische "UND"-Verknüpfung für die Signale der beiden Reset-Logiken realisiert ist. Dabei kann die Aktivierung bzw. Deaktivierung von deren Schaltung zur Belichtungsmessung über eine Schieberegisterkette mit Ladefunktion für jeweils zumindest eine Zeile und/oder zumindest eine Spalte von Bildelementen gemeinsam realisiert sein. In gleicher Weise können derartige Vereinfachungen und kleinere physikalische Dimensionen der Schaltung erzielt werden, wenn für jeweils zumindest eine Zeile und/oder zumindest eine Spalte von Bildelementen die Aktivierung bzw. Deaktivierung von deren Schaltungen zur Detektion von Helligkeitsänderungen und zur Belichtungsmessung über eine Schieberegisterkette mit Ladefunktion gemeinsam realisiert ist.

In der nachfolgenden Beschreibung soll die Erfindung anhand bevorzugter Ausführungsbeispiele und unter Bezugnahme auf die beigefügten Zeichnungen näher erläutert werden.

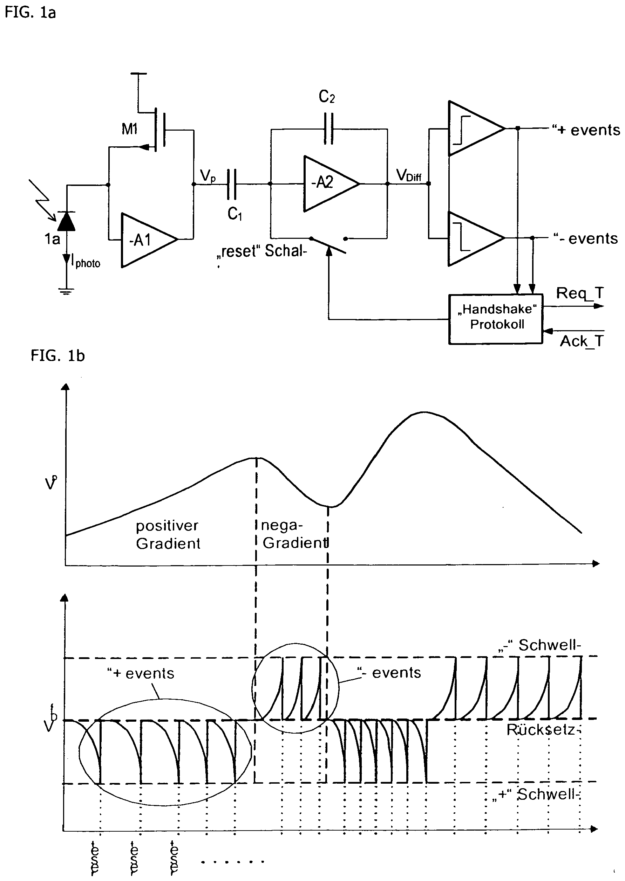

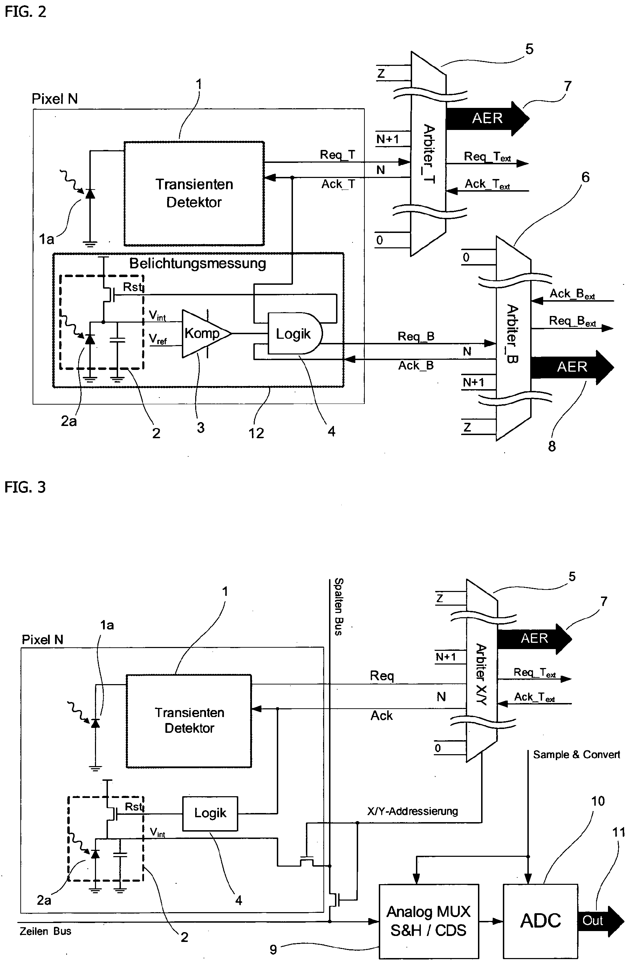

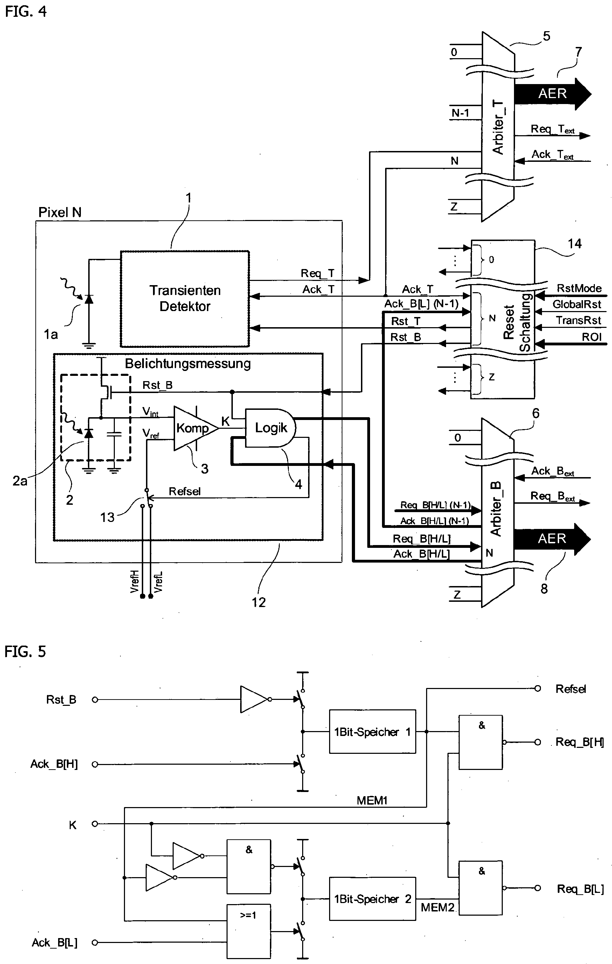

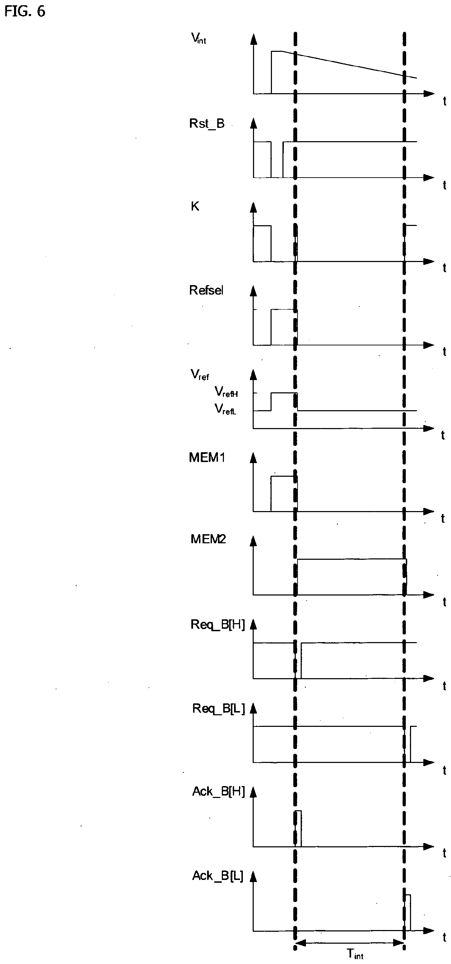

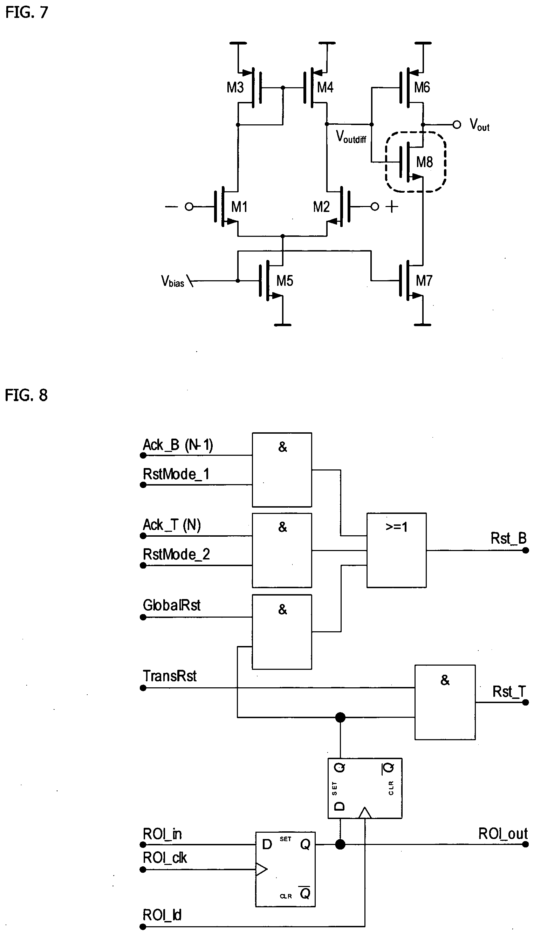

Die Fig. 1a zeigt ein vereinfachtes Schaltbild des Transientendetektors, Fig. 1b stellt dessen typische Signalverläufe dar, die Fig. 2 zeigt ein Block-Diagramm eines erfindungsgemäßen Bildelementes mit asynchronen Bus-Arbitern in einer ersten Ausführungsform, Fig. 3 ist Block-Diagramm eines Bildelementes mit asynchronem Arbiter, Multiplexer/Sample&Hold und ADC, Fig. 4 zeigt ein Block-Diagramm eines Bildelementes mit Arbitern für eine Ausführungsform gemäß Fig. 2, ergänzt durch Details für die Realisierung von Schaltungen für die flexible Generierung von Stimuli für Referenzframes oder synchronen Video-Betrieb und die wahlfreien Aktivierung bzw. Deaktivierung beliebiger Bereiche, zusammenhängend oder unzusammenhängend, im Pixelfeld ("Region-Of-Interest", ROI), Fig. 5. zeigt ein Blockschaltbild der Logik 4 im Belichtungsmessungsteil 12 des Pixels in Fig 4., Fig. 6 typische Zeitverläufe der Logik-Signale, Fig. 7 zeigt ein Schaltungsdiagramm eines erfindungsgemäßen Schwellwertentscheiders, und Fig. 8 ein Blockschaltbild der Reset Schaltung 14 in Fig. 4.

Ein vereinfachtes Schaltbild eines herkömmlichen Transientendetektors (Stand der Technik) ist in Fig. 1a dargestellt, wobei in Fig. 1b die darin auftretenden typischen Signalverläufe dargestellt sind. Das Eingangssignal des Transientendetektors ist der Strom durch Transistor M1 und die Photodiode 1a $I_{photo}$. In einer rückgekoppelten invertierenden Verstärkeranordnung A1 wird der Photostrom in ein Spannungssignal $V_p$ gewandelt. Änderungen von $V_p$ werden vom kapazitiv gekoppelten invertierenden Verstärker A2 verstärkt und erscheinen als Abweichung von einem definierten Spannungswert (Arbeitspunkt nach "reset" Ereignis) am Punkt $V_{Diff}$. Wenn das Signal $V_{Diff}$ bestimmte einstellbare Schwellwerte über- bzw. unterschreitet, was von einem von zwei Spannungs-Komparatoren detektiert wird, wird ein "reset" Signal kurzzeitig aktiviert, wodurch der "reset"-Schalter geschlossen und der Eingangsknoten des Verstärkers A2 mit seinem Ausgang kurzgeschlossen und folglich der Arbeitspunkt der Verstärkerschaltung rückgesetzt wird. Diese kurzen "reset"-Pulse werden, wie bereits erwähnt, verwendet um ein "Request"-Signal (Req_T) für einen Arbiter (Arbiter_T, 5) zu generieren, der die Übertragung jeweils eines Datenpaketes, das die Adresse des Pixels (X,Y-Adresse im Pixelfeld) enthält, durchführt (sog. "Address-Events"). Auf diese Art werden zeitliche Veränderungen der Photodiodenbeleuchtung (Helligkeitsänderungen) detektiert und asynchron über einen Datenbus 7 übertragen. Die Rate der Veränderung wird im Zeitbereich als Abstände zwischen den Reset-Ereignissen (vgl. Fig. 1b) repräsentiert, die Richtung der Veränderung (heller oder dunkler) ergibt sich aus dem Überschreiten des höheren oder Unterschreiten des tieferen Schwellwertes ("+" oder "-" event). Diese Schaltung wird im Bildelement, das ein Gegenstand der vorliegenden Erfindung ist, nebst anderen Schaltungsblöcken, verwendet.

Das erfindungsgemäße Bildelement der Fig. 2 ist vorzugsweise in CMOS Technologie mit Photodioden 1a, 2a als Photorezeptoren realisiert. Dieses Bildelement (Pixel) für einen aus einer Vielzahl von Pixeln zusammengesetzten Bildsensor besteht im Wesentlichen aus einem Transienten-Detektor 1 und einer Photodetektor-Schaltung 2. Diese wird erweitert um einen Schwellwertentscheider 3 mit Schaltung 4, welche gemeinsam durch die asynchrone und ereignisgesteuerte Übermittlung des Resultates der Belichtungsmessung am Pixel, zusammen mit der Übermittlung der Pixel-Adresse, an die Auswerteschaltung, die Umwandlung der Belichtungsinformation in eine Zeitdauer ermöglicht.

Um einen Bild-Sensor zu realisieren werden mehrere Bildelemente in einer (z.B. quadratischen) Matrix-Anordnung platziert. Das gesamte System besteht aus dem Bildsensor und einer Nachverarbeitungs- und Speichereinheit. In der Nachverarbeitungseinheit wird das Ergebnis jeder Belichtungsmessung, eine Zeitdauer, typischerweise mittels eines digitalen Zählers in einen Digitalwert umgewandelt. Die Speichereinheit beinhaltet eine Speicherzelle pro Pixel. In diesem Speicher wird das generierte Grauwert Bild abgelegt und bei Veränderungen laufend angepasst, wobei diese Veränderungen von den Pixeln autonom und asynchron mit sehr hoher Zeitauflösung detektiert, gemessen und gesendet werden. Das aktuelle Grauwert-Bild kann jederzeit parallel zum kontinuierlichen Bildaufnahmevorgang von einem Datenabnehmer aus dem Bildspeicher ausgelesen werden.

Die Daten der Bildelemente werden über asynchrone Bus-Arbiter 5, 6 und parallele Datenbusse 7, 8 an die Nachverarbeitungseinheit übertragen, wo die einzelnen Datenpakete (Adress-Events) mit einer Zeitsignatur versehen werden. Für Transientendetektor und Belichtungsmessungs-Teil können bevorzugt getrennte Bus-Arbiter 5, 6 und Datenbusse 7, 8 realisiert werden. Mit Hilfe von Request (Req) und Acknowledge (Ack) -Signalen wird ein asynchrones "handshaking"-Protokoll zwischen Bildsensor und Nachverarbeitungseinheit implementiert.

Alternativ können den Events die Zeitstempel bereits am Sensor zugewiesen werden und die Daten über synchrone Bus-Arbiter übermittelt werden.

Nachfolgend soll nun die Funktionsweise eines erfindungsgemäßen Bildelementes und Bildsensors erläutert werden. Der Transientendetektor 1 eines Pixels detektiert eine, eine einstellbare Schwelle überschreitende, relative Helligkeitsänderung und produziert ein "Adress-Event". Das bedeutet dass zu diesem Zeitpunkt das Pixel seine Adresse, typischerweise X,Y-Adresse im rechteckigen Pixelfeld des Bildsensors, selbständig zur Weiterverarbeitung übermittelt. Gleichzeitig wird ein Belichtungsmesszyklus (Integration) im Belichtungsmessungs-Teil gestartet indem der "Reset"-Schalter (Transistor Rst in der Photodetektor-Schaltung 2) geöffnet wird. Nach dem Ende der Integration, dadurch gekennzeichnet, dass die integrierte Photospannung am Kondensator der Photodetektor-Schaltung 2 einen einstellbaren Schwellwert Vref erreicht (detektiert von einem Schwellwertentscheider 3), wird ein weiteres "Adress-Event" generiert und asynchron zur Speicherung/Nachverarbeitung übertragen. Beide "Events" tragen die gleiche Pixel-Adresse, können jedoch durch ein Identifikationsbit unterschieden werden. Bei Verwendung von zwei parallelen Bus-Arbitern (bevorzugt) ist diese Unterscheidung nicht notwendig. Die Integrationszeit ist indirekt proportional zum Strom durch die Photodiode 2a und daher von der Belichtung des Pixels. Da die Integration mit dem Erreichen eines einstellbaren Schwellwertes endet, kodiert die Zeitdifferenz zwischen beiden "Adress-Events" die Belichtung des Pixels.

Die asynchrone Steuerung im Belichtungsmessungs-Teil wird im Normalbetrieb mit Hilfe der Logikschaltung 4 aus dem "handshake"-Signal Ack_T des Transientendetektors 1, dem "handshake"-Signal Ack_B des Belichtungsmessungsteils und dem Ausgangssignal des Schwellwertentscheiders 3 gebildet.

Beide Event-Typen werden somit ereignis- bzw. datengesteuert ausgelöst und über asynchrone Bus-Arbiter 5, 6 zur digitalen Nachverarbeitung übertragen. Korrelation (d.h. Identifikation der zusammengehörigen "Adress-Events") und TDC-Wandlung ("time-to-digital conversion") erfolgt in der digitalen Nachverarbeitung mit einstellbarer Auflösung. Die Verwendung von zwei getrennten Arbitern verringert durch Event-Kollisionen hervorgerufene nichteinheitliche Arbiter-Latenzen und daraus resultierende Störungen.

Als Schwellwertentscheider 3 wird ein Spannungskomparator mit einer einstellbaren Spannungsschwelle verwendet, wobei die Vergleichsspannung außerhalb oder innerhalb des Komparators generiert wird. Die Zeitdifferenz $t_{int}$ zwischen dem Zeitpunkt des die Belichtung auslösenden Ereignisses (z.B. detektiert vom Transientendetektor), und dem Erreichen des Schwellwertes $V_{ref}$ ist ein Maß für die Belichtung des Pixelelementes. Die Integrationszeit ist dabei abhängig von der Größe der Integrationskapazität in der Photodetektor-Schaltung 2, dem durch die Photodiode 2a hervorgerufenen Photostrom $I_{ph}$ sowie dem Spannungswert $V_{start}$ über der Integrationskapazität $C_{int}$ zu Beginn der Integration:

$$t_{\mathrm{int}} = \frac{C_{\mathrm{int}}}{I_{ph}} \cdot \left( V_{start} - V_{ref} \right)$$

Zeitlich zufällige Abweichungen (Spannungsrauschen) der Spannungswerte Vstart und $V_{ref}$, oder Unterschiede dieser Spannungen bei verschiedenen Bildelementen ("Fixed-Pattern-Noise") können zu unterschiedlichen Integrationszeiten bei gleicher Belichtung der Bildelemente führen. Zusätzliche Fehler können durch Ungenauigkeiten in der Detektion der Vergleichsspannung $V_{ref}$ durch den Komparator zufolge in verschiedenen Bildelementen unterschiedlicher Komparator-"Offset"-Spannungen entstehen. Eine signifikante Verbesserung der Bildsignalqualität hinsichtlich dieses statischen und dynamischen Bildrauschens kann durch die Ermittlung der Zeitdifferenz zwischen dem Erreichen zweier verschiedener Spannungswerte $V_{refH}$ und $V_{refL}$ an der Integrationskapazität erzielt werden. Die Integrationszeit beträgt somit:

$$t_{\mathrm{int}} = \frac{C_{\mathrm{int}}}{I_{ph}} \cdot \left( V_{refH} - V_{refL} \right)$$

Statische oder dynamische Abweichungen der Startspannung haben damit keine Auswirkungen auf die Integrationszeit. Ebenso werden Fehler, hervorgerufen durch Offset-Schwankungen, wirksam unterdrückt.

Gemäß der bevorzugten Ausführungsform der Erfindung wird bei Erreichen des oberen einstellbaren Schwellwertes $V_{refH}$, der am Schwellwertentscheider 3 des Bildelementes zu Beginn der Integration angelegt ist, die Adresse des Bildelementes zu diesem Zeitpunkt asynchron und ereignisgesteuert, zur Weiterverarbeitung übermittelt. Gleichzeitig erfolgt das Umschalten der Vergleichsspannung am Komparator des entsprechenden Bildelementes auf eine niedrigere Spannung $V_{refL}$ durch Umlegen des Schalters 13. Die Adresse des Bildelementes wird bei Erreichen dieser Spannung über der Integrationskapazität zu diesem Zeitpunkt erneut, asynchron und ereignisgesteuert, zur Weiterverarbeitung übermittelt und die Zeitdifferenz zwischen den Zeitpunkten des Erreichens der Vergleichsspannungen $V_{refH}$ und $V_{refL}$ als Maß für die Belichtung des Bildelementes herangezogen.

Als bevorzugter Schwellwertentscheider (Spannungskomparator) kann ein Differenzverstärker (M1-M5) mit nachgeschaltetem, invertierendem Verstärker (M6 und M7) mit Stromsenkenlast (zweistufiger Operationsverstärker) verwendet werden (Fig. 7), wobei die Spannung über der Integrationskapazität der Photodetektor-Schaltung 2 an den negativen (-) und die Vergleichsspannung an den positiven (+) Eingang des Komparators angeschlossen ist. Wenn die Spannung am negativen Eingang kleiner als die Spannung am positiven Eingang ist, beträgt die Ausgangsspannung des Komparators näherungsweise Betriebsspannung, andernfalls 0V. Der bereits bekannte, zweistufige Operationsverstärker wurde für die beschriebene Anwendung durch den Transistor M8 (vgl. Fig. 7) erweitert, um im Ruhezustand der Schaltung, der durch eine Spannung kleiner oder gleich 0V über der Integrationskapazität der Photodetektor-Schaltung 2 gekennzeichnet ist, den statischen Stromfluss im Spannungs-Komparator näherungsweise auf null zu reduzieren. Im Differenzverstärker ist dies für den Ruhezustand der Schaltung inhärent gegeben, da in diesem Fall der Stromfluss durch den Transistor M5 unterbrochen wird. Dabei beträgt die Spannung am Ausgang des Differenzverstärkers $V_{outdiff}$ 0V, was ohne die Verwendung des Transistors M8, in der zweiten Stufe des Verstärkers einen statischen Stromfluss, der durch den Stromsenkenlast-Transistor M6 und die angelegte Spannung $V_{bias}$ bestimmt wird, zur Folge hätte. Durch die Hinzunahme von M8, einem Transistor dessen Leitfähigkeit eine Gate-Source-Spannung größer 0V erfordert, kann der Stromfluss zwischen dem Knoten $V_{out}$ und dem Transistor M6 bei einer Ausgangsspannung des Differenzverstärkers von 0V, unterbrochen werden, ohne die sonstige Funktionalität der Schaltung zu beeinflussen.

Gemäß der bevorzugten Ausführungsform der Erfindung muss das Ausgangssignal des Komparators in geeigneter Weise, im Bildelement selbst, für die asynchrone Kommunikation gewandelt werden. Darüber hinaus hat das Umschalten der Referenzspannung des Komparators, bei Realisierung der Ausführungsform mit der Auswertung der Integrationszeit zwischen zwei verschiedenen Komparatorspannungen, ebenfalls in jedem Bildelement separat zu erfolgen. Beides wird mittels der Logikschaltung 4 realisiert.

Nachfolgend wird ein möglicher funktionaler Aufbau der Logikschaltung 4 zur Realisierung der Ausführungsform mit der Auswertung der Integrationszeit zwischen zwei verschiedenen Komparatorspannungen erläutert, wobei die Auswertung der Integrationszeit bis zum Erreichens nur einer Komparatorschwelle einen Sonderfall darstellt, der inhärent implementiert ist.

In Fig. 6 wird der zeitliche Verlauf der relevanten Signale für einen Belichtungsmesszyklus prinzipiell dargestellt. Mit dem Zurücksetzen der Spannung über der Integrationskapazität des Photodetektors 2 wird gleichzeitig die Logikschaltung 4 initialisiert und das entsprechende Schaltsignal Refsel für Schalter 13 zum Anlegen der oberen Referenzspannung $V_{refH}$ am Komparator generiert. Bei Erreichen von $V_{refH}$ über der Integrationskapazität des Bildelementes (durch das Ausgangssignal K des Komparators detektiert) wird das Signal Req_B[H] aktiviert und nach erfolgter Signalübertragung mittels des Quittierungssignals Ack_B[H] zurückgesetzt. Damit einhergehend wird die Referenzspannung am Komparator auf die untere Referenzspannung $V_{refL}$ umgeschaltet, was die Änderung des Signals Refsel erfordert. Das Umschalten des Signals Refsel kann entweder gleichzeitig mit der Aktivierung von Req_B[H] erfolgen oder, wie implementiert, durch das Quittierungssignal Ack_B[H] ausgelöst werden. Bei Erreichen von $V_{refL}$ über der Integrationskapazität des Bildelementes (durch Ausgangssignal K des Komparators detektiert) wird erneut ein Request-Signal aktiviert. Dazu kann entweder abermals das Signal Req_B[H] genutzt werden oder, wie implementiert, ein separates Signal Req_B[L]. Nach erfolgter Signalübertragung wird Req_B[L] mittels des Quittierungssignals Ack_B[L] zurückgesetzt. Damit ist der Vorgang der Bildaufnahme abgeschlossen.

Für den Fall der Auswertung der Integrationszeit zwischen Zurücksetzten der Integrationskapazität über dem Bildelement und der oberen Referenzspannung, wird die untere Referenzspannung auf einen höheren Wert als die obere Referenzspannung gesetzt, womit die Generierung eines zweiten, sowieso nicht auszuwertenden, Request-Signal vermieden wird.

Eine mögliche Realisierung der Logikschaltung 4 der bevorzugten Ausführungsform der Erfindung auf Gatter-Ebene ist in Fig. 5 gezeigt. Neben kombinatorischen Elementen werden zwei 1-Bit-Speicher verwendet, um die drei internen Zustände des Bildelementes (Integration - obere Referenzspannung über der Integrationskapazität ist noch nicht erreicht, Integration - Spannung über der Integrationskapazität befindet sich unterhalb der oberen und oberhalb der unteren Referenzspannung, keine Bildaufnahme) im Bildelement effektiv zu kodieren. Die Zustände der Speicher werden mittels der Signale MEM2 und MEM1 dargestellt. Das Rst-Signal sowie die Req_B[H/L]-Signale sind in der gezeigten Realisierung, jedoch nicht notwendigerweise, "low"-aktiv.

Da jedes Pixel autonom seine eigene Belichtungszeit steuert, ist ein sehr weiter Dynamikumfang der abbildbaren Beleuchtungsintensität und eine hohe Grauwert-Auflösung erzielbar. Da die erreichbare Auflösung abhängig vom Signal-Rausch-Verhältnis bzw. vom Dynamikumfang ist, daher vom Signalhub und somit von der Integrationszeit bzw. dem minimalen Photostrom und der eingestellten Schwelle, bewirkt eine Erhöhung der Bild-Aktualisierungsrate (im überlagerten synchronen Video-Betrieb) eine gleichzeitige Verringerung des Dynamikumfanges und daher der Grauwert-Auflösung, und umgekehrt. Durch Anpassen der Schwelle kann die Bild-Aktualisierungsrate in Abhängigkeit von der gewünschten Grauwert-Auflösung eingestellt werden.

Die Datenrate wird im Vergleich zum reinen Transienten-Sensor, wie er etwa der Fig. 1 entspricht, um den Faktor 2 erhöht, der beschriebene Bildsensor liefert jedoch zusätzlich ein Grauwert-Bild hoher Qualität und sehr hoher zeitlicher Auflösung. Es lässt sich abschätzen, dass - bei einer Grauwert-Auflösung von 8 Bit - eine Zeitauflösung im Sub-Millisekunden-Bereich (vergleichbar mit Bildsensoren mit mehreren Kilo-Frames pro Sekunde) realisierbar sein wird. Die dabei auftretenden Datenraten sind abhängig vom Geschehen in der Szene und bewegen sich nach Erfahrungen mit den Transienten-Sensoren im Bereich von einigen 10 bis einigen 100 Kilo-Events pro Sekunde (mit z.B. 16 Bit pro Event für einen 128x128 Pixel Sensor). Das im Speicher abgelegte aktuelle Grauwert-Bild kann je nach Anwendung mit sehr hohen Bildwiederholraten ausgelesen werden. In einem integrierten CMOS "System-on-Chip" können der Bild-Speicher, die Korrelationslogik und die TDC-Wandlung direkt am gleichen Silizium-Substrat wie der Sensor realisiert werden.

Anstatt die Belichtungsinformation in eine variable Zeitdauer umzuwandeln, kann alternativ, wie in einem herkömmlichen CMOS APS Bildsensor, für eine bestimmte Zeitdauer integriert (gemessen) werden und der resultierende Spannungswert mittels eines (oder mehrer) Analog/Digital-Wandler 10 gewandelt und ausgegeben werden. Eine beispielhafte Schaltung für eine derartige Ausführungsform eines erfindungsgemäßen Bildelementes ist in Fig. 3 dargestellt.

Der Belichtungszyklus wird, wie für Ausführungsform der Fig. 2, asynchron und ereignisgesteuert vom Transienten-Detektor 1 ausgelöst. Das asynchronen "handshake"-Signal des Transienten-Detektors 1, Ack_T, steuert das Reset-Signal, Rst, des Belichtungsmessungs-Teils (mittels einer Logikschaltung 4) sowie Multiplexer/Sample&Hold 9 und den Analog/Digital-Wandler 10. Der asynchronen Bus-Arbiter 5 steuert die Adressierung der Pixel im Pixel-Feld.

Nachfolgend soll nun die Funktionsweise dieser weiteren Ausführungsform erläutert werden. Der Transienten-Detektor 1 eines Pixels detektiert eine, eine einstellbare Schwelle überschreitende, relative Helligkeitsänderung und produziert ein "Adress-Event"; gleichzeitig startet es einen Belichtungszyklus (Integration) im Photodetektor-Teil 2. Nach dem Ende der Integration, definiert durch ein externes Steuersignal (Sample&Convert), wird die Ausgangsspannung des Belichtungsmessungs-Teils 2 von einer Sample&Hold Schaltung 9 abgenommen und von einem Analog/Digital-Wandler 10 gewandelt. Die Grauwert-Daten vom ADC 10 werden über einen separaten Daten-Bus 11 zur Nachverarbeitung/Speicherung gesendet. Die Integrationszeit wird extern von der Nachverarbeitung gesteuert (Sample&Convert). Die "Adress-Events" des Transienten-Detektor werden über einen asynchronen Bus-Arbiter 5 und Daten-Bus 7 zur Nachverarbeitung übertragen.

Die bislang beschriebenen Bildelemente und daraus aufgebaute Bildsensoren liefern erst nach einer gewissen Zeit ein komplettes Bild mit Grauwerten für alle der Bildelemente. Dies resultiert daraus, dass Pixel, die keine Veränderung in ihrem Blickfeld detektieren, auch keine "Events" generieren und daher auch keine Belichtungsmessung durchführen. Zur Festlegung der Parameter für die optimale Wandlung der Zeitinformation in Bild-Grauwerte ist die Kenntnis der Helligkeitsinformation der gesamten Szene erforderlich. Es ist daher vorteilhaft, zu beliebigen Zeitpunkten ein gesamtes Bild (Referenz-Frame) aufzunehmen zu können. Die für die TDC-Wandlung notwendigen Daten ("Offset", "Range") können auf einfache Weise aus den Zeitwerten des Frames extrahiert werden. Weiters ist diese Funktionalität zweckmäßig, um bei Szenen mit unveränderlichem Hintergrund schnell ein komplettes Bild zu erhalten.

Prinzipiell sind für die Aufnahme eines Referenz-Frames mehrere Vorgehensweisen möglich. Im einfachsten Fall wird das gesamte Pixelfeld extern stimuliert und dadurch die Integration in allen Pixel gleichzeitig gestartet. Das Pixel, welches die stärkste Beleuchtungsintensität sieht, sendet als erstes, die restlichen Pixel folgen in der Reihenfolge ihrer Belichtung ("Time-to-first-Spike"-Konzept). Dieses Konzept ist z.B. in Chen S.; Bermak, A., "A low power CMOS imager based on time-to-first-spike encoding and fair AER," Circuits and Systems, 2005. ISCAS 2005. IEEE International Symposium on , pp. 5306- 5309 Vol. 5, 23-26 May 2005, in Chen S.; Bermak, A., "A Second Generation Time-to-First-Spike Pixel with Asynchronous Self Power-off," Circuits and Systems, 2006. ISCAS 2006. Proceedings. 2006 IEEE International Symposium on, pp. 2289- 2292, 21-24 May 2006, in Qiang Luo; Harris, J.G., "A time-based CMOS image sensor," Circuits and Systems, 2004. ISCAS '04. Proceedings of the 2004 International Symposium on , vol.4, IV- 840-3 Vol.4, 23-26 May 2004, in Q. Luo, J.G. Harris, A Time-Based CMOS Image Sensor, IEEE International Symposium on Circuits And Systems ISCAS04, 2004, in Xin Qi; Xiaochuan Guo; Harris, J.G., "A time-to-first spike CMOS imager," Circuits and Systems, 2004. ISCAS '04. Proceedings of the 2004 International Symposium on, vol.4, IV- 824-7 Vol.4, 23-26 May 2004, oder der US 6,660,989 beschrieben.

Bei einheitlichen Szenen oder Szenenbereichen erreichen viele Pixel gleichzeitig den Schwellwert und senden ein entsprechendes "Adress-Event". Daraus ergeben sich DatenKollisionen an den Bus-Arbitern und in weiterer Folge unterschiedliche Arbiter-Latenzen und Fehler in der Zeitdifferenz zwischen dem Zeitpunkt des externen Stimulus und den zugehörigen Belichtungsmessungs-"Events". Die Folge sind Abbildungsfehler.

Um diese bekannten Nachteile zu vermeiden bzw. zu reduzieren werden erfindungsgemäß verschiedene Möglichkeiten für das Starten des Integrationsvorganges der Photodiode und der parallel geschalteten Kapazität, im Folgenden "Reset" genannt, implementiert (siehe Fig. 4). Die schaltungstechnische Realisierung der Reset Erzeugung erfolgt in der Reset Schaltung und ist in Fig. 8 dargestellt.

Das wesentlichste Merkmal der vorgestellten Erfindung ist, dass, wie bereits ausgeführt, im Normalbetrieb der Beginn der Belichtungsmessung eines Bildelements durch ein Ereignis des Transienten-Detektors desselben Bildelements ausgelöst wird.

Ein wesentliches Merkmal der vorgestellten Erfindung ist, dass die Reset Schaltung 14 nur spalten- und zeilenweise ausgeführt ist, was im Gegensatz zu einer Implementierung pro Pixel zu einer erheblichen Aufwands- und somit Flächenreduktion führt. Die Reset Schaltung 14 ist vorzugsweise identisch für Spalten und Zeilen und generiert jeweils die Reset Signale Rst_T (0 bis Z) für das Rücksetzen der Transientendetektoren 1 und die Reset Signale Rst_B (0 bis Z) für das Rücksetzen der Belichtungsmessungen 12 der jeweiligen Spalten bzw. Zeilen. Der Reset eines bestimmten Pixels erfolgt dabei durch die logische Verknüpfung der Rst_T bzw. Rst_B Signale der jeweiligen Spalte und Zeile im Pixel selbst. Wahlweise kann die Reset Schaltung auch direkt in jedem Pixel realisiert werden.

Ein wesentliches Merkmal der Erfindung ist es, den Reset auf ausgewählte Pixel einzuschränken. Die Auswahl erfolgt hierbei durch die ROI Signale, die beispielsweise eine Schieberegisterkette mit Ladefunktion ansteuern. Die seriell eingetakteten Daten aktivieren bzw. deaktivieren bestimmte Zeilen bzw. Spalten. Aus der Kombination bestimmter Zeilen und Spalten lassen sich bestimmte Pixel des Sensors aktivieren bzw. deaktivieren. In der vorliegenden Realisierung ist es möglich beliebige rechteckige Bereiche auszuwählen, wobei innerhalb eines Bereiches bestimmte Muster realisierbar sind (z.B. nur jedes 2. Pixel ist aktiviert, etc.). Durch geeignete Erweiterungen bzw. Anpassungen sind andere Muster vorstellbar. Im Folgenden wird dieses Muster ROI (Region of Interest) genannt. Wahlweise können die durch die ROI gewählten Muster invertiert werden um Bereiche zu deaktivieren; RONI (Region of Non-Interest).

Ein weiteres wesentliches Merkmal der Erfindung ist es, dass das im vorhergegangen Absatz beschriebene Muster wahlweise sowohl zum Reset des Transientendetektors 1 und/oder zum Reset der Belichtungsmessung 12 verwendet werden kann. Dies führ zu einer Vielzahl von Möglichkeiten, die in Kombination mit dem Reset Modus Signal RstMode, das im nächsten Abschnitt beschrieben wird, für vielfältige Anwendungsfälle eingesetzt werden können.

Die Auswahl des jeweiligen Reset Modus wird durch ein oder mehrere Steuersignale RstMode durchgeführt. Im Folgenden werden die verschiedenen Reset- bzw. Betriebsmoden besprochen:

Normaler Betriebsmodus

Im normalen Betriebsmodus wird das Zurücksetzen der Belichtungsmessung eines Pixels durch den Transientendetektor 1 desselben Pixels ausgelöst. Um eine effizientere, d.h. kleinere Realisierung zu erzielen wird der "Umweg" über eine Verknüpfung von spalten- und zeilenweise erzeugten Reset Signalen gewählt, wie im vorhergegangenen Absatz beschrieben. Wahlweise kann die Auslösung des Reset der Belichtungsmessung nach vorliegen eines Events des Transientendetektors 1 zufällig verzögert werden, um Datenkollisionen an den Bus-Arbitern zu vermeiden, wenn eine große Anzahl von Transientendetektoren gleichzeitig Events generieren. Vorzugsweise wird in dieser Erfindung der Reset der Belichtungsmessung durch das Acknowledge Signal Ack_T des Transientendetektors 1 derselben Pixelzeile bzw. -Spalte ausgelöst, das durch den Arbiter_T 5 erzeugt wird. Dadurch werden Datenkollisionen bereits durch den Arbiter_T 5 abgefangen. Es sind aber auch andere Strategien möglich.

## Selbständiger Modus

Im Selbständigen Modus arbeitet die Belichtungsmessung unabhängig vom Transientendetektor und kann, z.B. zur Aufnahme eines Referenz-Frames, durch einen globalen Reset, wie unten beschrieben, aktiviert werden.

## Sequentieller Modus

Der Sequentielle Modus wird eingesetzt, um Arbiterkollisionen wie sie z.B. bei einheitlichen Szenen(-Bereichen) im Selbständigen Modus auftreten können, zu reduzieren und trotzdem relativ schnell ein komplettes Bild der erfassten Szene zu erhalten. Im Sequentiellen Modus wird das Rücksetzen der Belichtungsmessung eines Pixels durch das Ende der Belichtungsmessung des Pixels der vorhergegangenen Spalte ausgelöst. Dies wird durch die Verwendung des Ack_B (N-1) Signals des Arbiter_B 6 erzielt. D.h. der Start der Belichtungsmessung des Pixels in der nachfolgenden Spalte ist unabhängig von einer Veränderung in der Szene. Wird beispielsweise die Belichtungsmessung der gesamten ersten Spalte des Pixelfeldes manuell, wie in einem der nachfolgenden Abschnitte beschrieben, angeregt, führt dies zu einem sequentiellen Auslösen der Belichtungsmessung der Pixel in allen Zeilen, wobei die Belichtungsmessung der Pixel der einzelnen Zeilen voneinander unabhängig ausgelöst werden und nur von der Belichtungsmessung des Pixels in der vorhergehenden Spalte abhängig sind. Durch die Verwendung des Ack_B (N-1), das das Ende der Belichtungsmessung des vorhergehenden Pixels signalisiert, ist die Verzögerung abhängig von der Belichtung des vorhergehenden Pixels, was zu einer nicht einheitlichen Verzögerung und somit zu einer gleichmäßigen Arbiterauslastung führt. Optional ist es auch möglich den Start der Belichtungsmessung eines Pixels mit dem Start der Belichtungsmessung des vorhergehenden Pixels nach einer gewissen einstellbaren Zeitverzögerung auszulösen. Eine Vertauschung von Spalten und Zeilen liefert sinngemäß dasselbe Ergebnis.

## Zufallsmodus

Im Zufallsmodus wird der Effekt ausgenutzt, dass bei mehrfacher identischer Realisierung entsprechend dimensionierten Bauelemente oder Strukturen auf einem Chip durch Toleranzen im Fertigungsprozess bestimmte Parameter, beispielsweise Ströme oder Spannungen, statistische Streuungen zwischen den verschiedenen Realisierungen aufweisen. Gemäß der bevorzugten Ausführungsform der Erfindung wird die Streuung des Leckstromes des auf geringe Abmessungen dimensionierten "reset" Schalters (Transistor) des Transientendetektors 1, verwendet, um einen zwischen den verschiedenen Pixeln streuenden Strom am Knotenpunkt zwischen C1, C2 und dem Eingang des Verstärkers A2 einzuprägen. Die Größe des Leckstromes des Reset-Transistors kann hierbei durch das Bulk-Potential desselben beeinflusst werden. Durch diesen Strom werden Events des Transientendetektors generiert, deren Auftreten zufällig für jedes Pixel ist und deren Rate durch das Bulk-Potential gesteuert werden kann. Die Events des Transientendetektors lösen wiederum wie im normalen Betriebsmodus die Belichtungsmessung aus. Somit werden die einzelnen Bildpunkte der erfassten Szene zufällig und mit einer einstellbaren Rate aktualisiert.

Unabhängig von der Auswahl der oben erwähnten Betriebsmodi besteht die Möglichkeit, die Belichtungsmessung für eine Auswahl bestimmter Pixel (ROI) auszulösen bzw. bestimmte Pixel (RONI) zu deaktivieren. Dadurch ergeben sich folgende Möglichkeiten:

Globaler Reset der Belichtungsmessung: Bei den durch die ROI ausgewählten Pixeln wird die Belichtungsmessung durch einen Puls am GlobalRst Signals gleichzeitig gestartet. Dies liefert sehr schnell ein Bild für die gesamte ROI, kann jedoch zu Datenkollisionen am Arbiter führen.

Als wesentliches Merkmal der Erfindung kann der globale Reset während dem normalen Betriebsmodus verwendet werden um das erfasste Bild oder Teile davon bei Bedarf zu aktualisieren.

Im Sequentiellen Modus wird durch Auslösung des globalen Resets beispielsweise der ersten Spalte die sequentielle Erfassung der gesamten Szene, wie oben beschrieben, gestartet.

Deaktivierung von Transientendetektoren: Die Transientendetektoren der durch die ROI ausgewählten Pixel werden durch die Aktivierung des TransRst Signals im Dauer-Reset gehalten. Dadurch liefern die ausgewählten Transientendetektoren keine Events mehr. Da die Belichtungsmessung im normalen Betriebsmodus durch die Transientendetektoren ausgelöst wird, kann hiermit der erfasste Bildbereich eingeschränkt werden bzw. Teile des Sensors deaktiviert werden. Dadurch ist beispielsweise ein (Mehr-)Zeilensensor Betrieb möglich.

## Patentansprüche

1. Verfahren zur Generierung eines Abbildes einer Szene in elektronischer Form durch Bildelemente, **dadurch gekennzeichnet, dass** eine Belichtungsmessung an einem der autonomen Bildelemente mittels eines ersten Photorezeptors durch das Ereignis einer selbständigen, asynchronen Detektion einer Helligkeitsänderung im vom Bildelement betrachteten S zenenausschnitt durch einen weiteren Photorezeptor des selben Bildelements ausgelöst wird, und dass das Resultat dieser Messung zusammen mit der Adresse des Bildelementes asynchron zur Speicherung und/oder Weiterverarbeitung übermittelt wird.

2. Verfahren nach Anspruch 1, **dadurch gekennzeichnet, dass** das Ende der Belichtungsmessung durch das Erreichen eines einstellbaren Schwellenwertes durch eine von der Belichtung abhängige physikalische Größe am Bildelement festgestellt wird, die Adresse des Bildelementes zu diesem Zeitpunkt zur Weiterverarbeitung übermittelt wird, und die Zeitdifferenz zwischen dem Zeitpunkt des die Belichtungsmessung auslösenden Ereignisses und dem Erreichen des Schwellenwertes als Maß für die Belichtung des Bildelementes herangezogen wird.

3. Verfahren nach Anspruch 1, **dadurch gekennzeichnet, dass** nach Erreichen eines ersten Spannungswertes zu Beginn der Integration die Adresse des Bildelementes übermittelt wird, dass bei Erreichen eines zweiten Spannungswertes am gleichen Bildelement die Adresse dieses Bildelementes erneut übermittelt wird, und dass Zeitdifferenz zwischen den Zeitpunkten des Erreichens der beiden unterschiedlichen Spannungswerte als Maß für die Belichtung des Bildelementes herangezogen wird.

4. Verfahren nach einem der Ansprüche 1 bis 3, **dadurch gekennzeichnet, dass** die Information über die Detektion einer Helligkeitsänderung und über die Belichtungsmessung parallel und unabhängig von einander übermittelt wird.

5. Verfahren nach einem der Ansprüche 1 bis 4, **dadurch gekennzeichnet, dass** die Belichtungsmessung an einem Bildelement durch eine Helligkeitsänderung an diesem Bildelement initiiert wird, wobei das Eintreten der Helligkeitsänderung zusätzlich durch die Übermittlung der Adresse des Bildelementes zur Weiterverarbeitung signalisiert wird.

6. Verfahren nach Anspruch 1, **dadurch gekennzeichnet, dass** der resultierende Spannungswert am Bildelement nach Integration über eine vorgegebene Zeitdauer ermittelt und als Maß für die Belichtung des Bildelementes herangezogen und zur Weiterverarbeitung übermittelt wird.

7. Verfahren nach einem der Ansprüche 1 bis 6, **dadurch gekennzeichnet, dass** die Detektion von Helligkeitsänderungen für eine Gruppe von Bildelementen gemeinsam freigeschaltet oder gesperrt wird.

8. Verfahren nach einem der Ansprüche 1 bis 7, **dadurch gekennzeichnet, dass** zu zumindest einem beliebigen Zeitpunkt eine Referenzbelichtungsmessung an zumindest einem Bildelement extern initiiert wird.

9. Verfahren nach Anspruch 8, **dadurch gekennzeichnet, dass** die Belichtungsmessung in mehreren, vorzugsweise in allen parallelen Zeilen von Bildelementen an deren erstem Bildelement jeweils im wesentlichen gleichzeitig initiiert wird, und dass am Ende der Integration der Belichtungsmessung eines Bildelementes die Belichtungsmessung am jeweils nächsten Bildelement der gleichen Zeile initiiert wird.

10. Verfahren nach einem der Ansprüche 8 oder 9, **dadurch gekennzeichnet, dass** die Referenzbelichtungsmessung gleichzeitig zur und unabhängig von der Detektion von Helligkeitsänderungen durch die Bildelemente des Bildsensors vorgenommen wird.

11. Bildelement für einen Bildsensor zur Generierung eines Bildes, mit einer Vorrichtung zur Belichtungsmessung, **dadurch gekennzeichnet, dass** zwei Photorezeptoren vorgesehen sind, von welchen ein Photorezeptor für die Belichtungsmessung genutzt wird, die durch eine Helligkeitsänderung am anderen Photorezeptor ausgelöst wird, wobei des Weiteren eine Schaltung (4) zur asynchronen und ereignisgesteuerten Übermittlung des Resultates der Belichtungsmessung sowie seiner Adresse an eine Auswerteschaltung vorgesehen ist, und dass zusätzlich eine Schaltung zur Detektion von Helligkeitsänderungen (1) vorgesehen und mit der Auswerteschaltung verbunden ist, wobei die Schaltung (1) bei Detektion einer Helligkeitsänderung ein Signal zur Initiierung der Vorrichtung zur Belichtungsmessung (2, 3) und der Schaltung (4) zur asynchronen und ereignisgesteuerten Übermittlung des Resultates der Belichtungsmessung sowie seiner Adresse ausgibt.

12. Bildelement nach Anspruch 11, **dadurch gekennzeichnet, dass** die Signalleitung von der Schaltung zur Detektion von Helligkeitsänderungen (1) zur Vorrichtung (2, 3) zur Belichtungsmessung und der Schaltung (4) zur asynchronen und ereignisgesteuerten Übermittlung des Resultates der Belichtungsmessung sowie seiner Adresse trennbar ist, wobei eine externe Steuerleitung zur Initiierung der Vorrichtung (2, 3) und der Schaltung (4) vorgesehen ist.

13. Bildelement nach Anspruch 11 oder 12, **dadurch gekennzeichnet, dass** die Vorrichtung (2, 3) zur Belichtungsmessung eine Integrationsschaltung mit Schwellwertentscheider (3) umfasst und zusammen mit der als Reset-Logik ausgebildeten Schaltung zur asynchronen und ereignisgesteuerten Übermittlung des Resultates der Belichtungsmessung sowie seiner Adresse (4) in einer Schaltung (12) zusammengefasst ist.

**14.** Bildelement nach Anspruch 13, **dadurch gekennzeichnet, dass** als Schwellwertentscheider (3) ein zweistufiger Operationsverstärker zum Einsatz kommt, bei dem mittels eines zusätzlichen Transistors (M8) im Ruhezustand der Schaltung der statische Stromfluss und damit die Leistungsaufnahme im Schwellwertentscheider auf nahezu Null reduziert wird.

**15.** Bildelement nach Anspruch 13 oder 14, **dadurch gekennzeichnet, dass** der Schwellwertentscheider (3) zwischen zwei einstellbaren Vergleichsspannungen umschaltbar ist, wobei die Schaltung (4) zur asynchronen und ereignisgesteuerten Übermittlung des Resultates der Belichtungsmessung sowie seiner Adresse den Schwellwertentscheider (3) zur Umschaltung zwischen diesen Vergleichsspannungen ansteuert.

**16.** Bildelement nach einem der Ansprüche 11 bis 15, **dadurch gekennzeichnet, dass** die Schaltung zur Belichtungsaufnahme (2) eine Integrationsschaltung mit einstellbarer Integrationszeit aufweist und mit einem Analog/Digital-Wandler (10) für den resultierenden Spannungswert verbunden ist.

**17.** Bildelement nach einem der Ansprüche 11 bis 15, **dadurch gekennzeichnet, dass** die Schaltung (1) zur Detektion von Helligkeitsänderungen einen Transienten-Detektor mit einem analogen Schaltkreis zur Signalvorverarbeitung und zum asynchronen Senden über vorzugsweise das Adress-Event-Protokoll aufweist.

**18.** Bildsensor zur Generierung eines Bildes in elektronischer Form mit einer Vielzahl von Bildelementen, **dadurch gekennzeichnet, dass** die Bildelemente nach einem der Ansprüche 11 bis 17 aufgebaut sind.

**19.** Bildsensor nach Anspruch 18, **dadurch gekennzeichnet, dass** eine Schaltung (14) zur zwangsweisen Anregung der Belichtungsmessung bei zumindest einem Bildelement zu einem beliebigen Zeitpunkt vorgesehen ist.

**20.** Bildsensor nach Anspruch 18 oder 19, **dadurch gekennzeichnet, dass** die Bildelemente zeilenförmig angeordnet sind und die Schaltung (14) zur im wesentlichen gleichzeitigen zwangsweisen Anregung der jeweils ersten Bildelemente jeder Zeile, zur Ermittlung des Endes der Belichtungsmessung jedes Bildelementes und zur zwangsweisen Anregung des jeweils nächsten Bildelementes der gleichen Zeile ausgelegt ist.

**Claims**

**1.** Method for the generation of an image of a scene in electronic form by picture elements, **characterized in that** an exposure measurement at one of the autonomous picture elements is initiated by means of a first light-sensitive circuit by the event of an independent, asynchronous detection of a change in light intensity in the field of view of the picture element by a second light-sensitive circuit of the same picture element, and that the result of this measurement together with the address of the picture element is asynchronously transmitted for storage and/or subsequent processing.

**2.** Method of claim 1, **characterized in that** the end of said exposure measurement is determined by a exposure dependent physical quantity in the picture element reaching an adjustable threshold value, at this point in time, the address of the picture element is transmitted for subsequent processing, and the time period between the point in time of the event that initiated the exposure measurement and the point in time of reaching the threshold is used as measure for the exposure of the picture element.

**3.** Method of claim 1, **characterized in that** the address of the picture element is transmitted after a first voltage value is reached at the beginning of the integration, **in that** after a second voltage value is reached at the same picture element the address of this picture element is again transmitted and **in that** the time period between the points in time of reaching the two different voltage is used as measure for the exposure of the picture element.

**4.** Method of claims 1 to 3, **characterized in that** the information about the detection of a change in light intensity and of exposure measurement are transmitted concurrently and independently of each other.

**5.** Method of claims 1 to 4, **characterized in that** the exposure measurement at a picture element is initiated by a change in light intensity at this picture element, and whereby the time of detection of the change in light intensity is signaled for subsequent processing by the transmission of the address of the picture element.

**6.** Method of claim 1, **characterized in that** the resulting voltage level at the picture element after integration for a given period of time is determined and used as measure for the exposure of the picture element and transmitted for subsequent processing.

**7.** Method of claims 1 to 6, **characterized in that** the detection of changes in light intensity can be jointly enabled or disabled for a group of picture elements.

**8.** Method of claims 1 to 7, **characterized in that** at least at one arbitrary point in time a reference exposure measurement at least one picture element is initiated externally.

**9.** Method of claim 8, **characterized in that** an exposure measurement in several, preferably in all parallel lines of picture elements is initiated at the first picture element of said lines essentially at the same time, and that at the end of the exposure measurement of a picture element the exposure measurement at the next picture element of the same line it is initiated.

**10.** Method of claims 8 or 9, **characterized in that** the reference exposure measurement is executed at the same time and independently of the detection of changes in light intensity by the picture elements of the image sensor.

**11.** Picture element for an image sensor for the generation of an image, with a device for exposure measurement, **characterized in that** two light-sensitive circuits are provided, a first of which is used for exposure measurement, that is initiated by a change of light intensity at the other light-sensitive circuit, whereas furthermore a circuit (4) for the asynchronous and event-based transmission of the result of the exposure measurement and its address to an evaluation circuit is provided, and wherein in addition a circuit for the detection of changes in light intensity (1) is provided and connected to the evaluation circuit, whereas the circuit (1) generates a signal for the initiation of the device for exposure measurement (2,3) and of the circuit (4) for the asynchronous and event-based transmission of the result of the exposure measurement and its address.

**12.** Picture element of claim 11, **characterized in that** the signal line can be disconnected from the circuit for the detection of changes in light intensity (1) to the device for the exposure measurement (2, 3) and to the circuit (4) for asynchronous and event-based transmission of the result of the exposure measurement and its address, wherein an external control line for the initiation of the device (2, 3) and the circuit (4) is provided.

**13.** Picture element of claims 11 or 12, **characterized in that** the circuit for exposure measurement (2,3) comprises an integration device with threshold comparator (3) and is integrated in one unit (12) together with the circuit (4) for the asynchronous and event-based transmission of the result and its address, that is embodied as reset logic.

**14.** Picture element of claim 13, **characterized in that** a two-stage operational amplifier is used as the threshold comparator (3), which uses an additional transistor (M8) in order to reduce the static current flow, and by that also the power consumption, in the threshold comparator in the idle state of the circuit to almost zero.

**15.** Picture element of claims 13 or 14, **characterized in that** the threshold comparator (3) can be switched between two adjustable reference voltages, whereas the circuit (4) for the asynchronous and event-based transmission of the result of the exposure measurement and its address controls the threshold comparator (3) for switching between the reference voltages.

**16.** Picture element of claims 11 to 15, **characterized in that** the circuit for exposure measurement (2) comprises an integrating circuit with adjustable integration time and is connected to an analog-to-digital converter (10) for the resulting voltage value.

**17.** Picture element of claims 11 to 15, **characterized in that** the circuit (1) for the detection of changes in light intensity comprises a transient detector with an analog circuit for signal preprocessing and for the asynchronous transmission preferably using the address-event protocol.

**18.** Image sensor for the generation of an image in electronic form with a multiplicity of picture elements, **characterized in that** the picture elements are designed according to one of claims 11 to 17.

**19.** Image sensor of claim 18, **characterized in that** a circuit (14) is provided for forcibly initiating the exposure measurement at at least one picture element at an arbitrary point in time.

**20.** Image sensor of claims 18 or 19, **characterized in that** the picture elements are arranged in lines and the circuit (14) is configured to forcibly initiate an exposure measurement in every first picture elements of every line essentially at the same time, to determine the end of the exposure measurement of every picture element and to forcibly initiate in each case the next picture element of the same line.

**Revendications**

**1.** Procédé pour générer une reproduction d'une scène sous forme électronique par des éléments d'image, **caractérisé en ce qu'**une mesure d'exposition est déclenchée au niveau de l'un des éléments d'image autonomes au moyen d'un premier photorécepteur par l'événement d'une détection asynchrone indépendante d'un changement de luminosité dans l'extrait de scène, observé par l'élément d'image, par un autre photorécepteur du même élément d'image, et **en ce que** le résultat de cette mesure est transmise, conjointement avec l'adresse de l'élément d'image, de manière asynchrone en vue de la mémorisation et/ou du traitement ultérieur.

2. Procédé selon la revendication 1, **caractérisé en ce que** la fin de la mesure d'exposition est détectée au niveau de l'élément d'image une fois qu'une valeur de seuil réglable est atteinte par une grandeur physique dépendant de l'exposition, **en ce que** l'adresse de l'élément d'image est transmise à cet instant en vue du traitement ultérieur, et **en ce que** la différence de temps entre l'instant de l'événement déclenchant la mesure d'exposition et le moment où la valeur de seuil est atteinte est utilisée comme mesure de l'exposition de l'élément d'image.

3. Procédé selon la revendication 1, **caractérisé en ce que**, après qu'une première valeur de tension a été atteinte, l'adresse de l'élément d'image est transmise au début de l'intégration, **en ce que**, lorsqu'une deuxième valeur de tension a été atteinte au niveau du même élément d'image, l'adresse de cet élément d'image est transmise à nouveau, et **en ce que** la différence de temps entre les instants où les deux valeurs de tension différentes ont été atteintes est utilisée comme mesure de l'exposition de l'élément d'image.

4. Procédé selon l'une des revendications 1 à 3, **caractérisé en ce que** l'information relative à la détection d'un changement de luminosité et l'information relative à la mesure d'exposition sont transmises en parallèle et indépendamment l'une de l'autre.

5. Procédé selon l'une des revendications 1 à 4, **caractérisé en ce que** la mesure d'exposition est déclenchée par un changement de luminosité au niveau de l'élément d'image, la survenue du changement de luminosité étant en outre signalée par la transmission de l'adresse de l'élément d'image en vue du traitement ultérieur.

6. Procédé selon la revendication 1, **caractérisé en ce que** la valeur de tension résultante au niveau de l'élément d'image est déterminée après intégration sur une durée prédéterminée et est utilisé comme mesure de l'exposition de l'élément d'image et est transmise en vue d'un traitement ultérieur.

7. Procédé selon l'une des revendications 1 à 6, **caractérisé en ce que** la détection des changements de luminosité d'un groupe d'éléments d'image est activée ou désactivée en même temps.

8. Procédé selon l'une des revendications 1 à 7, **caractérisé en ce qu'**une mesure d'exposition de référence au niveau d'au moins un élément d'image est à l'extérieur à au moins un instant quelconque.

9. Procédé selon la revendication 8, **caractérisé en ce que** la mesure d'exposition dans plusieurs rangées parallèles, d'éléments d'image, de préférence dans toutes, est déclenchée sensiblement en même temps au niveau de leur premier élément d'image et **en ce qu'**à la fin de l'intégration de la mesure d'exposition d'un élément d'image, on déclenche la mesure d'exposition au niveau de l'élément d'image suivant sur la même rangée.

10. Procédé selon l'une des revendications 8 ou 9, **caractérisé en ce que** la mesure d'exposition de référence est effectuée simultanément et indépendamment de la détection de changements de luminosité par les éléments d'image du capteur d'image.

11. Élément d'image, destiné à un capteur d'image pour générer une image, comprenant un dispositif de mesure d'exposition, **caractérisé en ce qu'**il est prévu deux photorécepteurs dont un photorécepteur est utilisé pour la mesure d'exposition qui est déclenchée par un changement de luminosité au niveau de l'autre photorécepteur, un circuit (4) étant en outre prévu pour la transmission, asynchrone et commandée sur événement, du résultat de la mesure d'exposition ainsi que de son adresse à un circuit d'évaluation, et **en ce qu'**un circuit est en outre prévu pour la détection de changements de luminosité (1) et est relié au circuit d'évaluation, le circuit (1) délivrant lors de la détection d'un changement de luminosité un signal de déclenchement du dispositif servant à la mesure d'exposition (2, 3) et du circuit (4) servant à la transmission, asynchrone et commandée sur événement, du résultat de la mesure d'exposition ainsi que de son adresse.

12. Élément d'image selon la revendication 11, **caractérisé en ce que** la ligne de signal allant du circuit de détection de changements de luminosité (1) au dispositif (2, 3) de mesure d'exposition et celle du circuit (4) de transmission, asynchrone et commandée sur événement, du résultat de la mesure d'exposition ainsi que son adresse peuvent être séparées, une ligne de commande externe étant prévue pour déclencher le dispositif (2, 3) et le circuit (4).

13. Élément d'image selon la revendication 11 ou 12, **caractérisé en ce que** le dispositif (2, 3) de mesure d'exposition comprend un circuit d'intégration pourvu d'un moyen de décision de valeur de seuil (3) et est assemblé conjointement avec le circuit, conformé en logique de réinitialisation, de transmission, asynchrone et commandée sur événement, du résultat de la mesure d'exposition et de son adresse (4) en un circuit (12).

**14.** Élément d'image selon la revendication 13, **caractérisé en ce que** l'on utilise comme moyen de décision de valeur de seuil (3) un amplificateur opérationnel à deux étages dans lequel le flux de courant statique et donc la consommation de puissance dans le moyen de décision de valeur de seuil sont réduits à presque zéro au moyen d'un transistor supplémentaire (M8) lorsque le circuit est au repos.

**15.** Élément d'image selon la revendication 13 ou 14, **caractérisé en ce que** le moyen de décision de valeur de seuil (3) peut être commuté entre deux tensions de référence réglables, ledit circuit (4) de transmission, asynchrone et commandée sur événement, du résultat de la mesure d'exposition ainsi que de l'adresse au moyen de décision de valeur de seuil (3) commandant la commutation entre ces tensions de référence.

**16.** Élément d'image selon l'une des revendications 11 à 15, **caractérisé en ce que** le circuit d'enregistrement d'exposition (2) comporte un circuit d'intégration à temps d'intégration réglable, et est relié à un convertisseur analogique/numérique (10) destiné à la valeur de tension résultante.

**17.** Élément d'image selon l'une des revendications 11 à 15, **caractérisé en ce que** le circuit (1) de détection des changements de luminosité comprend un détecteur de transitoires comportant un circuit analogique de prétraitement de signal et d'émission asynchrone de préférence sur le protocole d'événement d'adresse.

**18.** Capteur d'image destiné à générer une image sous forme électronique comportant une pluralité d'éléments d'image, **caractérisé en ce que** les éléments d'image sont construits selon l'une des revendications 11 à 17.

**19.** Capteur d'image selon la revendication 18, **caractérisé en ce qu'**un circuit (14) d'excitation forcée de la mesure d'exposition dans au moins un élément d'image à un instant quelconque.

**20.** Capteur d'image selon la revendication 18 ou 19, **caractérisé en ce que** les éléments d'image sont disposés en rangées et le circuit (14) est conçu l'excitation forcée sensiblement simultanée des premiers éléments d'image de chaque rangée, pour la détermination de la fin de la mesure d'exposition de chaque élément d'image et pour l'excitation forcée de l'élément d'image suivant de la même rangée.

**FIG. 1a**

**FIG. 1b**

FIG. 2

FIG. 3

FIG. 4

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006128315 A1
- US 6660989 B
- US 6069377 A
- US 6642503 B
- US 5650643 A
- US 5565915 A
- US 6587145 B

**In der Beschreibung aufgeführte Nicht-Patentliteratur**

- **FOSSUM E.R.** CMOS image sensors: Electronic Camera-On-A-Chip. *Electron Devices, IEEE Transactions,* Oktober 1997, vol. 44 (10), 1689-1698
- **LICHTSTEINER, P. ; POSCH, C. ; DELBRUCK, T.** A 128x128 120dB 30mW asynchronous vision sensor that responds to relative intensity change. *Solid-State Circuits, 2006 IEEE International Conference Digest of Technical Papers,* 06. Februar 2006, 2060-2069
- **LICHTSTEINER, P. ; DELBRUCK, T. ; POSCH, C.** A 100dB dynamic range high-speed dual-line optical transient sensor with asynchronous readout. *Circuits and Systems, 2006. ISCAS 2006. Proceedings. 2006 IEEE International Symposium,* 21. Mai 2006, 1659-1662
- **BERMAK.** A CMOS imager with PFM/PWM based analog-to-digital converter. *Circuits and Systems, 2002. ISCAS 2002. IEEE International Symposium,* 2002
- **CHEN S. ; BERMAK, A.** A low power CMOS imager based on time-to-first-spike encoding and fair AER. *Circuits and Systems, 2005. ISCAS 2005. IEEE International Symposium,* 23. Mai 2005, vol. 5, 5306-5309
- **CHEN S. ; BERMAK, A.** A Second Generation Time-to-First-Spike Pixel with Asynchronous Self Power-off. *Circuits and Systems, 2006. ISCAS 2006. Proceedings. 2006 IEEE International Symposium,* 21. Mai 2006, 2289-2292
- **CULURCIELLO, E. ; ETIENNE-CUMMINGS, R. ; BOAHEN, K.** Arbitrated address-event representation digital image sensor. *Electronics Letters,* 22. November 2001, vol. 37 (24), 1443-1445
- **CULURCIELLO, E. ; ETIENNE-CUMMINGS, R. ; BOAHEN, K.A.** A biomorphic digital image sensor. *Solid-State Circuits, IEEE Journal,* Februar 2003, vol. 38 (2), 281-294
- **J.G. HARRIS ; X. QI ; Q. LUO ; X. GUO.** SNR and FPN considerations for time-based wide dynamic range CMOS image sensors. *6th World Multiconference on Systemics, Cybernetics and Informatics,* 14. Juli 2002
- PWM digital pixel sensor based on asynchronous self-resetting scheme. **KITCHEN, A. ; BERMAK, A. ; BOUZERDOUM, A.** Electron Device Letters. IEEE, Juli 2004, vol. 25, 471-473
- **QIANG LUO ; HARRIS, J.G.** A time-based CMOS image sensor. *Circuits and Systems, 2004. ISCAS '04. Proceedings of the 2004 International Symposium,* 23. Mai 2004, vol. 4
- **XIN QI ; XIAOCHUAN GUO ; HARRIS, J.G.** A time-to-first spike CMOS imager. *Circuits and Systems, 2004. ISCAS '04. Proceedings of the 2004 International Symposium,* 23. Mai 2004, vol. 4
- **CHEN XU ; CHAO SHEN ; BERMAK, A. ; MANSUN CHAN.** A new digital-pixel architecture for CMOS image sensor with pixel-level ADC and pulse width modulation using a 0.18 μm CMOS technology. *Electron Devices and Solid-State Circuits, 2003 IEEE Conference,* 16. Dezember 2003, 265-268
- **NOBLE P.J.W.** Self-scanned silicon image detector arrays. *Electron Devices, IEEE Transactions,* April 1968, vol. 15 (4), 202-209
- **CHAMBERLAIN S.G.** Photosensitivity and Scanning of Silicon Image Detector Arrays. *Solid-State Circuits, IEEE Journal,* Dezember 1969, vol. 4 (6), 333-342
- **BOAHEN K.** Point-to-point connectivity between neuromorphic chips using Address Events. *IEEE Transactions on Circuits and Systems II: Analog and Digital Signal Processing,* 2000, vol. 47, 416-433
- **K. A. BOAHEN.** A burst-mode word-serial address-event link-I transmitter design. *IEEE Transactions on Circuits and Systems I-Regular Papers,* 2004, vol. 51, 1269-1280

- **Q. LUO ; J.G. HARRIS.** A Time-Based CMOS Image Sensor. *IEEE International Symposium on Circuits And Systems ISCAS04,* 2004

- **XIN QI ; XIAOCHUAN GUO ; HARRIS, J.G.** A time-to-first spike CMOS imager. *Circuits and Systems, 2004. ISCAS '04. Proceedings of the 2004 International Symposium,* 23. Mai 2005, vol. 4